(19) Europäisches Patentamt

European Patent Office

Office européen des brevets

(11) **EP 0 677 844 B1**

(12) **FASCICULE DE BREVET EUROPEEN**

(45) Date de publication et mention
de la délivrance du brevet:
**16.02.2000 Bulletin 2000/07**

(51) Int Cl.$^7$: **G11B 21/10**, G11B 5/49,
G11B 21/00

(21) Numéro de dépôt: **95400782.9**

(22) Date de dépôt: **07.04.1995**

(54) **Système de lecture d'un support d'enregistrement multipiste**

Lesesystem für einen Mehrspur-Aufzeichnungsträger

Read system for a multitrack recording medium

(84) Etats contractants désignés:
**DE GB IT NL**

(30) Priorité: **15.04.1994 FR 9404520**

(43) Date de publication de la demande:
**18.10.1995 Bulletin 1995/42**

(73) Titulaire: **THOMSON-CSF**
**75008 Paris (FR)**

(72) Inventeur: **Colineau, Joseph**
**F-92402 Courbevoie Cedex (FR)**

(56) Documents cités:
**EP-A- 0 150 992**          **EP-A- 0 356 959**
**EP-A- 0 540 385**          **GB-A- 1 478 339**

- **DATABASE WPI Section EI, Week 8347 Derwent Publications Ltd., London, GB; Class T03, AN 83-822370 & EP-A-0 094 313 (DIGITAL EQUIPMENT CORP.) , 16 Novembre 1983**
- **RESEARCH DISCLOSURE, no. 333, Janvier 1992 EMSWORTH GB, page 22 XP 000281135 'Tracking utilizing synchronization signals 000281135'**
- **PATENT ABSTRACTS OF JAPAN vol. 13 no. 391 (P-926) ,30 Août 1989 & JP-A-01 138663 (MATSUSHITA ELECTRIC IND. CO. LTD.) 31 Mai 1989,**

**Description**

L'invention concerne un système de lecture d'un support d'enregistrement multipiste et plus particulièrement un système de lecture d'une bande magnétique multipiste.

La lecture de bandes magnétiques de formats différents pose un problème d'adaptation du lecteur à ces divers formats. La difficulté est encore plus grande lorsque le média d'enregistrement est susceptible de se déformer par suite de contraintes mécaniques appliquées à la bande ou du vieillissement de celle-ci (shrinking).

Enfin l'acceptation de formats hélicoïdaux ou longitudinaux sur un même lecteur ne peut être résolue par les procédés conventionnels.

Cette invention se base sur l'emploi de têtes de lecture multipistes telles que décrites dans la Demande de Brevet français 89 17313. Elle décrit un circuit de traitement du signal de sortie de telles têtes de manière à restituer au mieux l'information enregistrée sur chacune des pistes physiques du média d'enregistrement. Ce circuit peut fonctionner avec des formats d'enregistrements longitudinaux variés, éventuellement affectés de "shrinking", ainsi qu'avec des formats hélicoïdaux. Il permet par ailleurs, de réaliser une fonction de suivi de piste "statique" (sans aucun actuateur).

Diverses solutions permettant la compatibilité à la lecture ont été proposées. Citons la Demande de Brevet français 91 13314 décrivant un système de lecture multiformat adapté aux enregistrements longitudinaux.

Le but de l'invention est de concevoir un système de lecture d'un support d'enregistrement multipiste qui s'applique non seulement aux formats longitudinaux mais aussi aux formats hélicoïdaux, et qui soit bien adapté au suivi rapide de fluctuations de positions des pistes physiques.

Un système de lecture selon l'invention est défini à la revendication 1.

Les figures 1a et 1b montrent respectivement des formats longitudinal et hélicoïdal.

La figure 2 montre un système de lecture selon un mode de réalisation de l'invention.

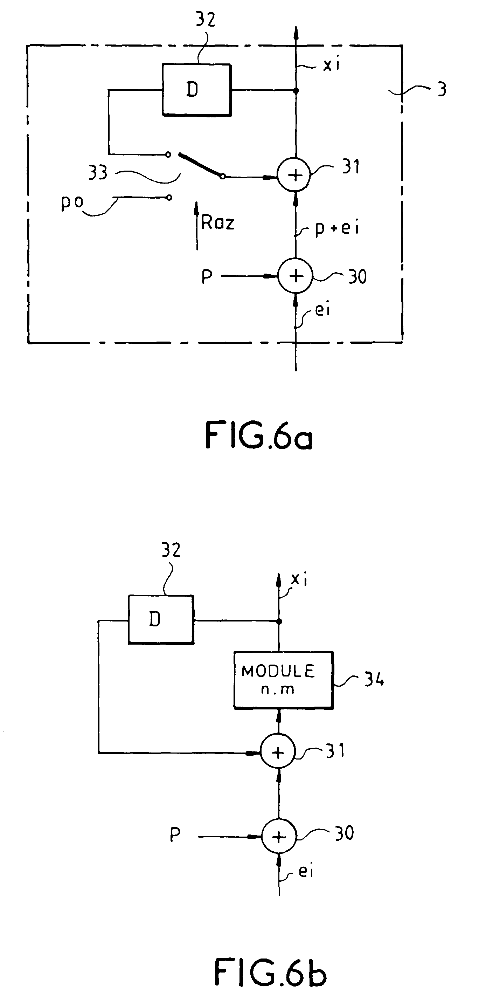

Les figures 3a, 3b, 4, 5a, 5b, 6a et 6b montrent les détails des circuits 1, 2, 3 et 4 représentés à la figure 2.

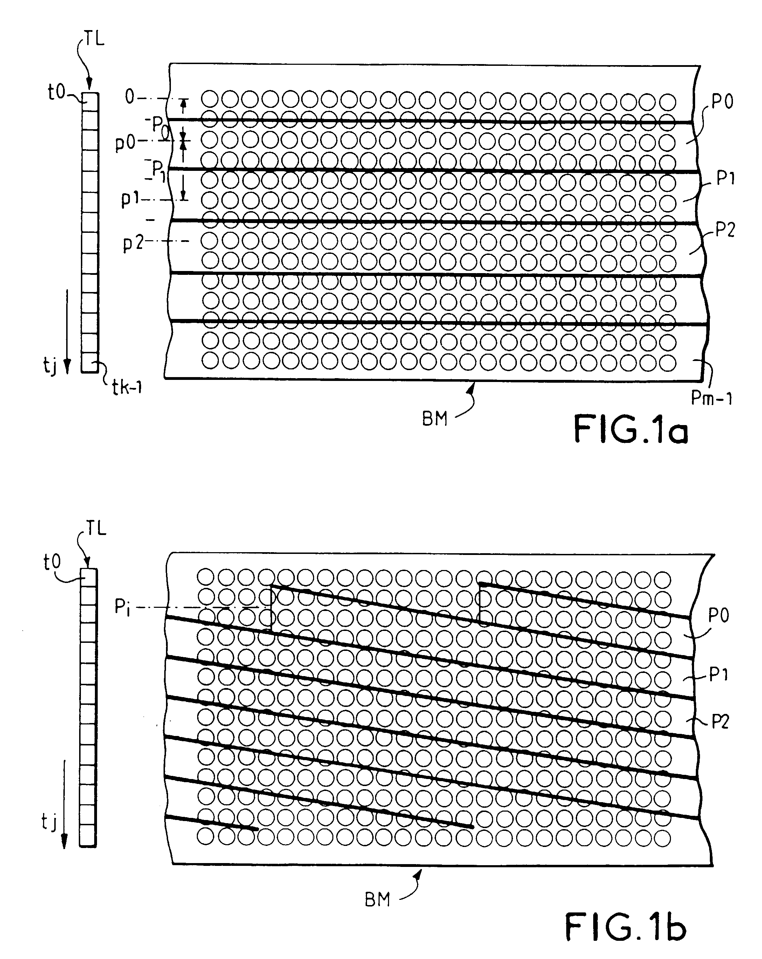

L'invention est applicable à la lecture de bandes magnétiques telles que représentées en figures 1a et 1b. Sur la figure 1a, les pistes d'informations PO à Pm-1 ont été enregistrées longitudinalement à la bande; on dit que le format est longitudinal. Sur la figure 1b, le format d'enregistrement est hélicoïdal. Sur la partie gauche des bandes, on a représenté une rangée de têtes de lecture t0 à tR1 appelée tête de lecture multipiste TL.

Sur les bandes magnétiques, chaque point représente la zone du média "lue" par l'un des éléments de tête c'est-à-dire un échantillon de lecture. Sur ces figures, $t_j$ représente le numéro de la tête et p0, p1, p2, ... les positions physiques du centre de pistes. Le média d'enregistrement comporte m pistes physiques PO à Pm-1, chacune d'entre elles étant "lue" en moyenne par n échantillons (n n'étant pas nécessairement entier).

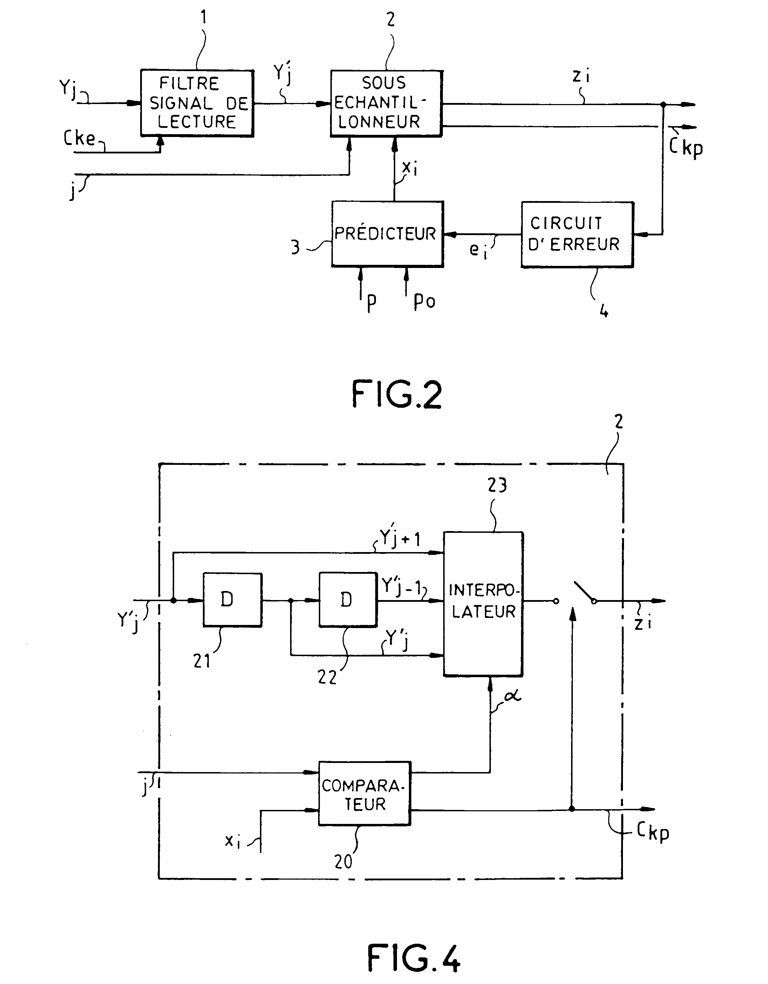

Le circuit de traitement permettant de reconstituer, à partir des échantillons de lecture $y_j$ lus par les têtes, les échantillons de signal $z_i$ sur chacune des pistes est représenté figure 2. Il comporte les éléments suivants :

- un filtre 1 combinant plusieurs échantillons de lecture $y_j$ consécutifs, pour élaborer des échantillons $y'_j$ dont le rapport S/B est amélioré ;
- un sous-échantillonneur 2 permettant de ne retenir que les échantillons de signal $z_i$ correspondant à des échantillons $y'_j$ pour lesquels j correspond à la position physique du centre d'une piste. Ce sous-échantillonneur pourra avoir une fonction de déphaseur pour interpoler le signal si la position physique d'une piste ne correspond pas à une valeur entière ;
- un circuit d'erreur 4 permettant de détecter une erreur résiduelle de position $e_i$ des signaux reconstitués $z_i$ ;
- un filtre prédicteur 3 élaborant à partir des éléments connus du format de la bande : nombre de pistes m, pas des pistes p, et éventuellement position théorique de la piste 0, ainsi que de l'erreur de position observée $e_i$, la position estimée $x_i$ des pistes physiques.

Ce circuit travaillant en boucle fermée, est capable de suivre en temps réel des variations de position des pistes physiques dues aux variations de position de la bande (erreurs de guidage) ou aux déformations physiques de celle-ci (shrinking, dilatations dues à la température et à l'hygrométrie ...).

Dans le cas d'un enregistrement hélicoïdal où la position physique des pistes varie continuellement, ce filtre prédicteur permet de se recaler sur le centre des pistes et de suivre leur évolution.

En sortie de ce circuit, on dispose d'échantillons affectés aux pistes i. En enregistrement longitudinal, ils peuvent être traités séquentiellement dans un circuit de traitement travaillant de manière multiplexée sur un certain nombre de pistes. Sur les formats hélicoïdaux, on pourra, en début ou au cours du traitement, réorganiser les données dans une mémoire permettant de reconstituer les pistes physiques qui sont de longueur finie. On pourra avantageusement réaliser cette opération au moment de la reconstitution et du réalignement des blocs de données. Il suffit de transmettre jusqu'à cette étape du traitement, une information ("drapeau") repérant la position de l'une des pistes, que l'on appellera conventionnellement "piste 0".

Sur les figures, les différentes références de signaux ont les significations suivantes :

$y_j$ : échantillons de lecture

$j$ : n° de l'échantillon courant

$3i$ : échantillons du signal de la piste i

$i$ : numéro de piste

$e_i$ : écart de position de la piste i

$p_o$ : position théorique de la piste 0

$p$ : pas théorique des pistes

$x_i$ : position estimée de la piste i

$C_{KE}$ : horloge échantillons de lecture

$C_{KP}$ : horloge échantillons de pistes

$n$ : nombre moyen d'échantillons par piste

On va maintenant décrire plus en détail les fonctions des circuits de la figure 2.

Le filtre 1 a pour rôle de combiner des échantillons voisins de signal appartenant à la même piste, afin d'améliorer le rapport signal à bruit. La réponse impulsionnelle idéale de ce filtre est celle qui rend maximum le rapport signal/bruit tout en présentant des zéros aux distances multiples de la période p des pistes (en réalité, c'est la convolution de la réponse impulsionnelle transversale de la tête de lecture par ce filtre qui doit présenter des zéros au pas des pistes : si la tête de lecture présente de la diaphonie, on pourra la compenser grâce à ce filtre). Si l'on dispose d'un rapport signal/bruit suffisant, on pourra omettre ce filtre.

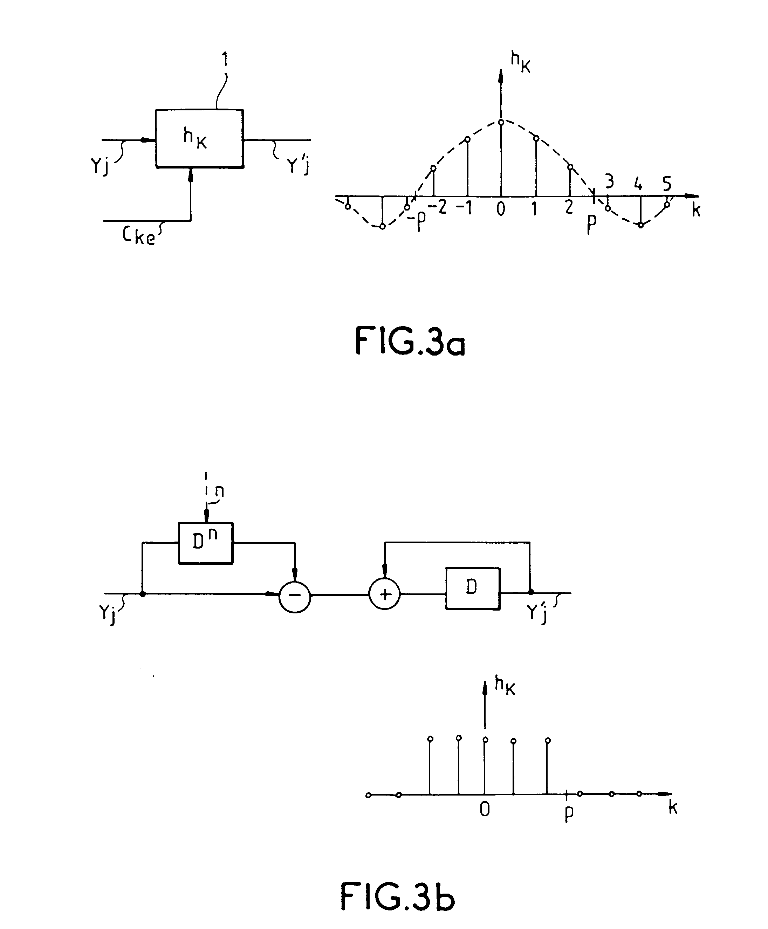

Pour un nombre moyen d'échantillons par piste n faible, ce filtre pourra être un filtre transversal (figure 3a). Ce filtre fournit autant de combinaisons d'échantillons qu'il y a d'échantillons transversalement à la bande. Chaque combinaison prend en compte un nombre constant d'échantillons. Une combinaison diffère d'une combinaison voisine par décalage d'un échantillon. Pour n grand, il sera plus simple de réaliser un filtre à moyenne glissante (figure 3b). D représente ici un circuit à retard d'une période d'horloge $C_{ke}$ et $D^n$ un circuit à retard de n périodes de la même horloge.

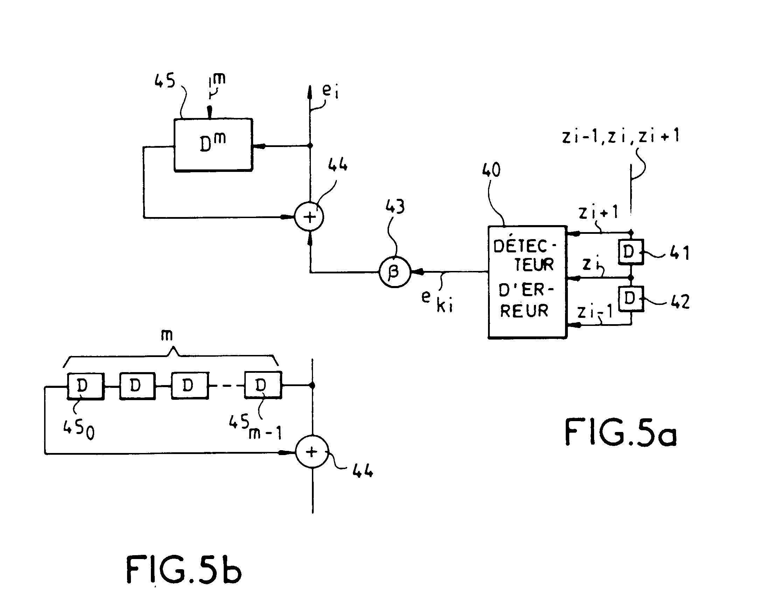

Le sous-échantillonneur 2 représenté en figure 4 reçoit les échantillons filtrés $y'_j$ et élabore des échantillons de signal $z_i$ pour chacune des pistes i.

Pour cela, un comparateur 20 élabore, à partir du numéro j de l'échantillon courant, et de la position $x_i$ estimée de l'échantillon, une commande $C_{kp}$ de validation de l'échantillon $z_i$, lorsque les deux coïncident, au moins pour leur partie entière.

Dans le cas où l'on travaille avec un faible facteur de suréchantillonnage n dans le sens transversal, on peut améliorer la qualité du signal $z_i$ en réalisant une interpolation. En effet, la position estimée $x_i$ ne correspond généralement pas à une valeur entière, et donc à une position précise j d'échantillon. La partie fractionnaire de $x_i$, notée a, sert alors à sélectionner un jeu de coefficients d'un filtre transversal court réalisant une interpolation entre, par exemple, trois valeurs successives de $y'_j$. Les circuits à retard 21 et 22 permettent de fournir ces trois valeurs. L'interpolateur 23 reçoit ces trois valeurs $y'_{j-1}$, $y_j$ et $y_{j+1}$. Il reçoit également du comparateur 20, la valeur fractionnaire $\alpha$ de $x_i$ ce qui lui permet de choisir entre les trois valeurs $y'_{j-1}$, $y'_j$ et $y'_{j+1}$ celle qui doit donner lieu à $z_i$.

On peut ainsi obtenir un bon fonctionnement de l'ensemble, et une exploitation optimale du signal de lecture, même pour des valeurs de n fractionnaires, et petites (n < 2).

Le circuit d'erreur de position 4 représenté en figure 5a reçoit les échantillons de pistes $z_i$, et élabore un signal d'erreur, en observant l'intercorrélation résiduelle entre pistes reconstituées. L'algorithme est le suivant :

$$\text{erreur instantanée} = z_i \cdot \text{signe}(z_{i-1}) - Z_i \cdot \text{signe}(Z_{i+1})$$

Les circuits à retard 41 et 42 permettent de présenter simultanément les échantillons $z_{i-1}$, $z_i$ et $z_{i+1}$ au détecteur d'erreur 40. Celui-ci réalise l'opération de l'algorithme précédent.

L'originalité de cet algorithme est qu'il utilise comme approximation du signal enregistré sur les pistes voisines, et utilisé pour estimer l'intercorrélation, le signe du signal reconstitué $z_i$, et non le signal décodé. L'approximation qui est faite consiste à négliger la phase quelconque d'échantillonnage de $z_i$. En fait, on réalise un pré-décodage, sans reconstitution de l'horloge. Cette méthode a un double avantage : sa simplicité, et le fait que l'on ne crée pas de retard supplémentaire comme si l'on devait décoder complètement les $z_i$. Il s'ensuit que la boucle d'asservissement de position réalisée ainsi est plus rapide, et n'interfère pas avec les autres boucles du système (PLL ...).

Cet algorithme suppose que les signaux écrits sur les pistes voisines sont indépendants. Dans le cas contraire, on peut estimer l'intercorrélation des signaux de pistes voisines et apporter une correction.

L'erreur instantanée est filtrée dans un filtre récursif 44, 45 travaillant de manière multiplexée sur les m pistes enregistrées. Ce filtre comporte un circuit 45, tel qu'un registre à décalage permettant d'enregistrer m valeur d'erreurs instantanées $e_o$ à $e_{m-1}$ correspondant aux m pistes de la bande. A chaque fonctionnement du circuit d'erreur, le circuit 45 avance d'un pas et présente une valeur d'erreur estimée antérieurement au circuit additionneur 44. Un coefficient de pondération $\beta$ fourni par le circuit 43 fixe le temps de réponse du filtre.

Le circuit 45 peut être réalisé comme cela est représenté en figure 5b. Il comporte autant de circuits $45_o$ à $45_{m-1}$, placés en série, qu'il a de pistes. A chaque réception d'un signal d'erreur $e_{ki}$, ce signal est additionné par le circuit 44 avec le signal d'erreur calculé antérieurement pour la même piste et fourni par $45_o$. De plus, le signal d'erreur courant est enregistré dans le circuit $45_{m-1}$.

Le filtre prédicteur 3 comporte essentiellement un intégrateur 31, 32. Le circuit 32 est un circuit du type registre à décalage permettant d'enregistrer m positions calculées de pistes. Il présente à chaque instant au circuit additionneur 31, une position de piste calculée antérieurement.

Le circuit additionneur 30 reçoit un signal d'erreur instantanée $e_i$ et l'additionne à la valeur moyenne des pas p des pistes.

Ce filtre prédicteur élabore la position estimée des pistes physiques $x_i$, connaissant $p_0$, la position théorique de la piste 0, et p le pas moyen des pistes. L'intégrateur, remis à $p_0$ en début de chaque trame d'échantillons par le circuit 33, reçoit à son entrée p et $e_i$. A chaque période de l'horloge $C_{kp}$, il élabore ainsi une nouvelle valeur de $x_i$ selon l'équation

$$x_i = x_{i-1} + p + e_i$$

Si le signal d'erreur d'une ou plusieurs pistes n'est pas disponible (par suite de drop-out ou d'encrassement d'une tête par exemple), ei = 0 et l'intégrateur estime la position de ces pistes d'après la position des pistes précédentes, et le pas, connu, des pistes. L'erreur de prédiction reste donc faible. La prédiction est très robuste, même en présence de signaux perturbés. Par ailleurs, un écart de position détecté sur une piste est reporté sur l'ensemble des pistes. La position moyenne des pistes, ou, ce qui est équivalent, la position de la bande devant les têtes peut donc être estimée et suivie avec précision. Le système réalise donc un "tracking statique" des pistes. Il peut être utilisé pour cette fonction uniquement, indépendamment de ses possibilités de multiformat. Dans ce cas, l'on choisira n aussi faible que le permet l'échantillonnage transversal sans générer trop de repliement de spectre.

Dans le cas du format hélicoïdal, $p_0$ n'est pas fixe. Une méthode consiste à ne pas effectuer dans ce cas le chargement initial de l'intégrateur avec $p_0$, mais à insérer dans la boucle de l'intégrateur un circuit 34 réalisant une fonction modulo n.m, n.m représentant le nombre d'échantillons de lecture effectivement utiles pour la lecture des m pistes obliques. Alors, le circuit réalise automatiquement le suivi des pistes obliques. Cette fonction modulo est, de la même manière, utilisable sur des formats longitudinaux.

## Revendications

1. Système de lecture d'un support d'enregistrement multipiste comportant un dispositif permettant de lire un nombre n d'échantillons ($y_i$) d'information répartis sur la largeur de chaque piste, caractérisé en ce qu'il comporte :

   - un filtre (1) permettant d'effectuer plusieurs combinaisons ($y'_i$) de plusieurs desdits échantillons ($y_i$) de chaque piste (i), ces combinaisons étant décalées entre elles d'un ou plusieurs desdits échantillons ;

   - un circuit de sous-échantillonnage (2) choisissant dans les différentes combinaisons ($y'_i$) de chaque piste, sous la commande d'un prédicteur de position de piste (3), une combinaison déterminée ($z_i$) pour chaque piste, ladite combinaison choisie ($z_i$) tenant lieu d'échantillon d'information de ladite piste;

   - un circuit de calcul d'erreur (4) de position calculant pour chaque piste l'erreur de position de la combinaison choisie à partir de plusieurs desdites combinaisons choisies ($z_i$) et fournissant un signal de correction d'erreur ($e_i$) au prédicteur de position(3).

2. Système de lecture selon la revendication 1, caractérisé en ce que le circuit de calcul d'erreur (4) comporte un circuit (40) pour calculer la différence des produits de la valeur de la combinaison choisie par les signes des valeurs des informations des pistes voisines.

3. Système de lecture selon la revendication 2, caractérisé en ce que le circuit de calcul d'erreur de position (4) comporte un circuit mémoire (45) comportant autant de cases qu'il y a de pistes, chaque case étant prévue pour contenir une valeur de signal de correction d'erreur d'une piste, un circuit de commande ayant pour rôle de commander, à chaque calcul d'erreur de position d'une piste, l'intégration de cette valeur calculée avec l'erreur de position calculée antérieurement.

4. Système selon la revendication 3, caractérisé en ce que le circuit mémoire (45) est un registre à décalage et que l'intégration est réalisée par un circuit additionneur (44).

5. Système de lecture selon la revendication 1, caractérisé en ce que le prédicteur de position (3) comporte un circuit intégrateur (31, 32) comprenant un circuit mémoire (32) comportant autant de cases qu'il y a de pistes chaque case étant prévue pour contenir une valeur de position de piste calculée antérieurement, un circuit de commande fournissant une valeur de position au circuit intégrateur pour l'intégrer à une valeur de position calculée antérieurement.

6. Système de lecture selon la revendication 5, caractérisé en ce que le circuit mémoire (32) est un registre à décalage, que l'intégration est réalisée à l'aide d'un circuit additionneur (31), et qu'un additionneur (30) reçoit une valeur d'erreur de position calculée ($e_i$), l'additionne à une valeur de pas de piste et fournit la valeur de cette addition au circuit additionneur (31).

7. Système de lecture selon la revendication 5, caractérisé en ce qu'un circuit de remise à zéro (33) fournit en début de lecture un signal de remise à zéro représentant la valeur de position théorique de la première piste au circuit additionneur (31) à la place d'une valeur de position de piste fournie par le circuit mémoire (32).

8. Système selon la revendication 6, caractérisé en ce qu'il comporte un circuit (34) réalisant la fonction modulé n.m, avec n étant le nombre moyen d'échantillons par piste et m étant le nombre de pistes à lire ; ce circuit (34) étant situé en série dans la boucle de l'intégrateur constituée par le circuit mémoire (32) et le circuit additionneur (31).

**Patentansprüche**

1. System zum Lesen eines mehrspurigen Aufzeichnungsträgers, das eine Vorrichtung enthält, die das Lesen einer Anzahl n von Informationsabtastwerten ($y_i$) ermöglicht, die über die Breite jeder Spur verteilt sind, dadurch gekennzeichnet, daß es enthält:

   - ein Filter (1), das ermöglicht, mehrere Kombinationen ($y_i'$) aus mehreren der Abtastwerte ($y_i$) jeder Spur (i) herzustellen, wobei diese Kombinationen um einen oder mehrere der Abtastwerte zueinander versetzt sind;

   - einer Unterabtastschaltung (2), die unter der Steuerung einer Spurpositionsvorhersageeinrichtung (3) in den verschiedenen Kombinationen ($y_i'$) jeder Spur eine bestimmte Kombination ($z_i$) für jede Spur wählt, wobei die gewählte Kombination ($z_i$) an die Stelle des Informationsabtastwertes der Spur tritt;

   - einer Positionsfehler-Berechnungsschaltung (4), die für jede Spur den Positionsfehler der gewählten Kombination anhand mehrerer der gewählten Kombinationen ($z_i$) berechnet und ein Fehlerkorrektursignal ($e_i$) an die Positionsvorhersageeinrichtung (3) liefert.

2. Lesesystem nach Anspruch 1, dadurch gekennzeichnet, daß die Fehlerberechnungsschaltung (4) eine Schaltung (40) zum Berechnen der Differenz der Produkte aus dem Wert der gewählten Kombination und dem jeweiligen Vorzeichen der Werte der Informationen benachbarter Spuren enthält.

3. Lesesystem nach Anspruch 2, dadurch gekennzeichnet, daß die Positionsfehler-Berechnungsschaltung (4) eine Speicherschaltung (45) enthält, die so viele Speicherplätze enthält wie Spuren vorhanden sind, wobei jeder Speicherplatz dazu vorgesehen ist, einen Wert des Fehlerkorrektursignals einer Spur zu enthalten, wobei eine Steuerschaltung die Aufgabe hat, bei jeder Berechnung eines Positionsfehlers einer Spur die Integration dieses berechneten Werts mit dem vorher berechneten Positionsfehler zu steuern.

4. System nach Anspruch 3, dadurch gekennzeichnet, daß die Speicherschaltung (45) ein Schieberegister ist und daß die Integration durch eine Additionsschaltung (44) ausgeführt wird.

5. Lesesystem nach Anspruch 1, dadurch gekennzeichnet, daß die Positionsvorhersageeinrichtung (3) eine Integrationsschaltung (31, 32) enthält, die eine Speicherschaltung (32) aufweist, die so viele Speicherplätze besitzt wie Spuren vorhanden sind, wobei jeder Speicherplatz dazu vorgesehen ist, einen früher berechneten Spurpositionswert zu halten, wobei eine Steuerschaltung an die Integrationsschaltung einen Positionswert liefert, um ihn mit einem früher berechneten Positionswert zu integrieren.

6. Lesesystem nach Anspruch 5, dadurch gekennzeichnet, daß die Speicherschaltung (32) ein Schieberegister ist, daß die Integration mit Hilfe einer Additionsschaltung (31) ausgeführt wird und daß ein Addierer (30) einen berechneten Positionsfehlerwert ($e_i$) empfängt, ihn zu einem Spurschrittweitenwert addiert und den Wert dieser Addition an die Additionsschaltung (31) liefert.

7. Lesesystem nach Anspruch 5, dadurch gekennzeichnet, daß eine Nullrücksetzschaltung (33) an die Additionsschaltung (31) bei Beginn des Lesens ein Nullrücksetzsignal liefert, das den Wert der theoretischen Position der ersten Spur repräsentiert und den von der Speicherschaltung (32) gelieferten Spurpositionswert ersetzt.

8. System nach Anspruch 6, dadurch gekennzeichnet, daß es eine Schaltung (34) enthält, die die Modulo-Funktion n.m ausführt, wobei n die mittlere Anzahl von Abtastwerten pro Speicherschaltung (32) und der Additionsschaltung (31) gebildet ist, in Serie geschaltet ist.

**Claims**

1. System for reading a multi-track recording medium comprising a device enabling a number n of information samples ($Y_i$) distributed over the width of each track to be read, characterised by comprising:

   - a filter (1) enabling several combinations ($Y_i$) of a plurality of said samples ($Y_i$) of each track (i) to be made, said combinations differing from one another by a shift equal to one or more of said samples;

- a sub-sampling circuit (2) which, under the control of a track position predictor (3), selects from among the different combinations $(Y_i')$ of each track a determined combination $(z_i)$ for each track, said selected combination $(z_i)$ standing for an information sample of said track;

- a positional error computation circuit (4) which for each track computes the positional error of the selected combination from a plurality of said selected combinations $(z_i)$ and outputs an error correction signal $(e_i)$ to the position predictor (3).

2. Reading system according to claim 1, characterised in that the error computation circuit (4) has a circuit (40) to compute the difference between the products obtained by multiplying the value of the selected combination by the signs of the values of the information items of the neighbouring tracks.

3. System according to claim 2, characterised in that the positional error computation circuit (4) has a memory circuit (45) comprising as many compartments as there are tracks, each compartment being designed to contain a value of an error correction signal relating to a track, a control circuit whose job it is to control, at each track position error computation, the integration of said computed value with the positional error computed previously.

4. System according to claim 3, characterised in that the memory circuit (45) is a shift register and that the integration is carried out by an adder circuit (44).

5. Reading system according to claim 1, characterised in that position predictor (3) has an integrating circuit (31, 32) comprising a memory circuit (32) having as many compartments as there are tracks, each compartment being designed to contain a track position value computed previously, a control circuit supplying a position value to the integrating circuit in order to integrate it with a position value computed previously.

6. Reading system according to claim 5, characterised in that the memory circuit (32) is a shift register, that the integration is carried out with the aid of an adder circuit (31), and that an adder (30) receives a computed positional error value $(e_i)$, adds it to a track pitch value and supplies the value of this addition to the adder circuit (31).

7. Reading system according to claim 5, characterised in that at the start of the reading process a resetting circuit (33) supplies a resetting signal which represents the theoretical positional value of the first track to the adder circuit (31) in place of a track position value supplied by the memory circuit (32).

8. System according to claim 6, characterised in that it has a circuit (34) performing the modulo n.m. function, n being the average number of samples per track and m being the number of tracks to be read; said circuit (34) being located in series in the integrator loop constituted by the memory circuit (32) and the adder circuit (31).

FIG.1a

FIG.1b

FIG.2

FIG.4

FIG.3a

FIG.3b

FIG.5a

FIG.5b

FIG.6a

FIG.6b